# EUROPÄISCHE PATENTSCHRIFT

(11) **EP 2 148 414 B1**
(45) Veröffentlichungstag und Bekanntmachung des Hinweises auf die Patenterteilung: **24.08.2011**
(21) Anmeldenummer: 09155304.0
(22) Anmeldetag: 17.03.2009
(51) Int. Cl.: H02K 7/08, F16C 35/04, F16C 35/067, F16C 35/077, B60S 1/16, H02K 5/16

(54) **Klemmbügel zum axialen Sichern einer Ankerwelle sowie Elektromotor mit einem solchen Klemmbügel**
Clamp for axially securing an armature shaft and electric motor with such a clamp
Etrier de serrage destiné à la fixation axiale d'un arbre d'induit et moteur électrique avec un tel étrier

(30) Priorität: 24.07.2008 DE 102008040711
(43) Veröffentlichungstag der Anmeldung: 27.01.2010
(73) Patentinhaber: ROBERT BOSCH GMBH, 70442 Stuttgart (DE)
(72) Erfinder: Flink, Simone, 77855, Achern (DE); Kastinger, Guenter, 76571, Gaggenau-Sulzbach (DE); Dudek, Alexander, 77656, Offenburg (DE)

(56) Entgegenhaltungen:
- WO-A1-2007/119915
- US-B1- 6 288 466

## Beschreibung

### Stand der Technik

Die Erfindung betrifft einen Klemmbügel zum axialen Sichern einer Ankerwelle eines Elektromotors gemäß dem Oberbegriff des Anspruchs 1 sowie einen Elektromotor gemäß Anspruch 11.

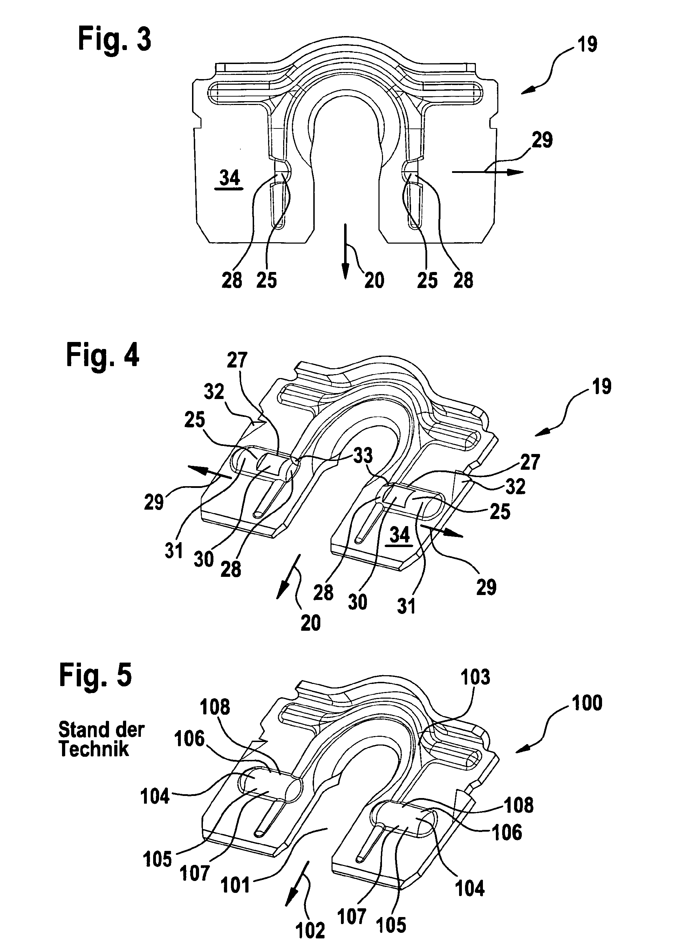

Ein aus der Serienfertigung bekannter Klemmbügel zum axialen Sichern einer Ankerwelle eines Elektromotors ist in Fig. 5 mit dem Bezugszeichen 100 gekennzeichnet. Der bekannte Klemmbügel 100 ist als flächiges Stanzbiegeteil aus Metall ausgebildet und weist eine randseitig offene Ausnehmung 101 auf, mit der der Klemmbügel 100 in eine Montagerichtung 102 über eine Ankerwelle geschoben werden kann. Der Klemmbügel 100 dient zum axialen Abstützen eines äußeren Laufrings eines Kugellagers, wobei sich der äußere Laufring axial an einem gerundeten Anlagewulst 103 abstützt. Zur erleichterten Montage und zur Sicherung des Klemmbügels 100 gegen ein unbeabsichtigtes Lösen entgegen der Montagerichtung 102 ist zu beiden Seiten der Ausnehmung 101 jeweils eine Erhebung 104 angeordnet, wobei sich die Erhebungen 104 im Wesentlichen quer zur Montagerichtung 102 erstrecken. Jede Erhebung 104 weist eine in Montagerichtung 102 zeigende Anlaufseite 105 und eine entgegengesetzt gerichtete Ablaufseite 106 auf. Wie sich aus Fig. 5 ergibt, ist dabei auf jeder Anlaufseite 105 eine gerundete Anlauframpe 107 realisiert, wobei sich die Anlauframpen 107 zumindest näherungsweise über die gesamte Längserstreckung der zugehörigen Erhebung 104 quer zur Montagerichtung 102 erstrecken. Weiterhin ist aus Fig. 5 zu entnehmen, dass auf jeder Ablaufseite 106 eine ebenfalls gerundet ausgeformte Ablaufschräge 108 realisiert ist.

Bei der Montage des bekannten Klemmbügels 100 in die Montagerichtung 102 kommen zunächst die Anlauframpen 107 in Kontakt mit einer umfänglichen Kante des äußeren Laufrings des Wälzlagers, wodurch der Klemmbügel 100 in Richtung der Längserstreckung der Ankerwelle ausgelenkt wird. Nachdem die höchste Stelle der Erhebung 104 überwunden wurde, schwenkt der Klemmbügel 100 wieder zurück, wobei der Klemmbügel 100 bei dieser Schwenkbewegung mit seiner Ablaufschräge 108 entlang der umlaufenden Kante des äußeren Laufrings gleitet. Bei dem Relativverschieben der Erhebungen 104 zu dem äußeren Laufring des Kugellagers kommt es sowohl an den Anlauframpen 107 als auch an den Ablaufschrägen 108 aufgrund der wirkenden Flächenpressung zu einer Spanbildung. Diese gilt es im Hinblick auf die Gewährleistung der Betriebssicherheit eines mit einem Klemmbügel ausgestatteten Elektromotors, insbesondere eines Wischerantriebs, zu vermeiden.

### Offenbarung der Erfindung

### Technische Aufgabe

Der Erfindung liegt daher die Aufgabe zugrunde, einen optimierten Klemmbügel vorzuschlagen, bei dem Spanbildung bei der Montage reduziert ist. Ferner besteht die Aufgabe darin, einen Elektromotor mit einem entsprechend optimierten Klemmbügel vorzuschlagen.

### Technische Lösung

Diese Aufgabe wird hinsichtlich des Klemmbügels zum Sichern der Ankerwelle gegen ein axiales Verschieben mit den Merkmalen des Anspruchs 1 und hinsichtlich des Elektromotors mit den Merkmalen des Anspruchs 11 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, die Anlauframpe der mindestens einen seitlich der Ausnehmung des, vorzugsweise als Stanzbiegeteil aus Metall ausgebildeten, Klemmbügels im Vergleich zum Stand der Technik zu verkleinern und dadurch die Kontaktfläche zum äußeren Laufring bei der Montage zu reduzieren. Durch die Minimierung der Kontaktfläche wird wiederum das zur Spanbildung zur Verfügung stehende Material minimiert, wodurch im Ergebnis mit einer minimierten Spanbildung beim Aufschieben des Klemmbügels zu rechnen ist. Anders ausgedrückt erstreckt sich die Anlauframpe bei einem nach dem Konzept der Erfindung ausgebildeten Klemmbügel quer zur Montagerichtung nur so weit nach außen, dass der äußere Laufring die Anlauframpe beim Verschieben des Klemmbügels in einem äußeren Bereich überragt. Noch anders ausgedrückt erstreckt sich die Anlauframpe quer zur Montagerichtung weniger weit nach außen, d.h. in eine von der Ausnehmung wegweisende Richtung, als der Außendurchmesser des äußeren Laufrings in einer sich quer zur Montagerichtung orientierenden und die Längsmittelachse der Ankerwelle aufnehmenden Ebene. Die zunächst überraschend scheinende Maßnahme der Anlaufflächenverkleinerung und der zwangsläufig damit verbundenen Erhöhung der Flächenpressung bei der Montage führt zu dem gewünschten Erfolg einer verringerten Spanbildung, insbesondere deshalb, weil ein mechanischer Kontakt zwischen einem quer zur Montagerichtung äußersten Umfangsabschnitt (Randbereich) des äußeren Laufrings und der Anlauffläche vermieden wird.

Zusätzlich oder alternativ zu der zuvor vorgeschlagenen Maßnahme kann die Spanbildung bei der Montage dadurch reduziert werden, dass die Ablaufseite nicht wie im Stand der Technik als konvex gerundete Ablaufschräge ausgebildet wird, sondern derart, dass der Klemmbügel nach Überschreiten der Anlauframpe (schlagartig) in seine endgültige Montageposition zurückfedert ohne dabei Material auf der Ablaufseite von der Erhebung abzutragen. Dies wird bei einem nach dem Konzept der Erfindung ausgebildeten Klemmbügel dadurch erreicht, dass in der Ablaufseite eine Stufung realisiert ist, wobei die Stufung beispielsweise einen rechten Winkel oder eine konkave Form aufweisen kann. Wesentlich ist eine im Vergleich zur Anlauffläche erheblich vergrößerte Steigung, die bei gegebener Montagegeschwindigkeit ein Zurückfedern des Klemmbügels ermöglicht, ohne dass dieser dabei über die gesamte Ablaufseite streift.

In Weiterbildung der Erfindung ist mit Vorteil vorgesehen, dass die Anlauframpe derart dimensioniert ist, dass die Erhebung bei der Montage des Klemmbügels in der Montagerichtung nicht in Kontakt mit einem inneren Laufring des, vorzugsweise als Kugellager ausgebildeten, Wälzlagers kommt, um eine Beschädigung des Wälzlagers zu vermeiden.

Besonders bevorzugt ist eine Ausführungsvariante des Klemmbügels, bei der sich die Erhebung quer zur Montagerichtung nach außen, d.h. in eine von der randseitig offenen Ausnehmung wegweisenden Richtung, nicht über die Anlauframpe und damit nicht über den Außendurchmesser des äußeren Laufrings hinaus erstreckt.

Um die Federcharakteristik bzw. Steifigkeit des vorgeschlagenen Klemmbügels im Vergleich zu dem aus dem Stand der Technik bekannten Klemmbügel so wenig wie möglich zu beeinflussen, ist alternativ zu der vorgenannten Ausführungsvariante eine Ausführungsform realisierbar, bei der außen an die Anlauframpe ein sich quer zur Montagerichtung nach außen erstreckender, im Vergleich zur Anlauframpe höhenreduzierter Erhebungsabschnitt anschließt. Anders ausgedrückt, weist die Erhebung benachbart zur Anlauframpe einen abgeflachten, vorzugsweise ebenen, sich quer zur Montagerichtung nach außen erstreckenden Abschnitt auf. Dabei ist eine Ausführungsform besonders bevorzugt, bei der dieser höhenreduzierte Erhebungsabschnitt als, vorzugsweise in einer Draufsicht rechteckig konturierte, Aussparung in der Erhebung realisiert ist, sich also die Erhebung quer zur Montagerichtung nach außen benachbart zum höhenreduzierten Erhebungsabschnitt mit einem Erhebungsabschnitt fortsetzt, dessen Höhe senkrecht zur Flächenerstreckung des Klemmbügels vorzugsweise zumindest näherungsweise der Höhe der Erhebung im Bereich der Anlauframpe entspricht.

Besonders zweckmäßig ist eine Ausführungsform des Klemmbügels, bei der die auf der Ablaufseite realisierte Stufung eine Hinterrastung für den äußeren Laufring des Wälzlagers in der Montageposition bildet, wodurch ein unbeabsichtigtes Lösen des Klemmbügels entgegen der Montagerichtung im Gegensatz zum Stand der Technik sicher vermieden wird, da eine Stufung wesentlich schwerer zu überwinden ist als eine schräg, insbesondere konvex, gekrümmte Ablaufschräge.

In Weiterbildung der Erfindung ist mit Vorteil vorgesehen, dass die Anlauframpe der Erhebung konvex gerundet ist, wobei sich die konvexe Rundung vorzugsweise auch auf einer in Richtung der randseitig offenen Ausnehmung weisenden Seite (Innenseite) der Erhebung fortsetzt.

Eine optimale Verspannung des Klemmbügels innerhalb des Elektromotors kann dadurch erreicht werden, dass die Anlagefläche für den äußeren Laufring (leicht) erhöht angeordnet ist. Dies kann bevorzugt dadurch gewährleistet werden, dass die Anlagefläche von einem Anlagewulst gebildet wird, dessen Höhe in Richtung der Längserstreckung der Ankerwelle gemessen geringer ist als die Höhe der Anlauframpe um ein unbeabsichtigtes Lösen des Klemmbügels zu vermeiden.

Bevorzugt umfasst der Klemmbügel nicht nur eine einzige seitlich der randseitig offenen Ausnehmung angeordnete Erhebung, sondern zwei Erhebungen, die auf beide Seiten der Ausnehmung verteilt angeordnet sind. Bevorzugt sind die Erhebungen dabei spiegelsymmetrisch zu einer die Längsachse der Ankerwelle aufnehmenden und mittig durch die randseitig offene Ausnehmung verlaufenden Spiegelebene ausgebildet und/oder angeordnet.

Die Erfindung führt auch auf einen Elektromotor, vorzugsweise für einen Scheibenwischerantrieb bzw. auf einen Scheibenwischerantrieb mit einem Elektromotor, wobei der Elektromotor mit einem zuvor beschriebenen Klemmbügel ausgestattet ist, an dem sich in axialer Richtung ein äußerer Laufring eines Wälzlagers, insbesondere eines Kugellagers, abstützt. Besonders bevorzugt ist dabei eine Ausführungsform, bei der der Klemmbügel axial zwischen einem Kommutator des Elektromotors und dem Wälzlager angeordnet ist.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine perspektivische Darstellung eines mit einem Klemmbügel ausgestatten Elektromotors eines Scheibenwischerantriebs,
- Fig. 2:: ein erstes mögliches Ausführungsbeispiel eines Klemmbügels, bei dem in den Erhebungen jeweils eine mittige Aussparung vorgesehen ist,
- Fig. 3:: ein alternatives Ausführungsbeispiel eines Klemmbügels, bei der sich die Erhebungen quer zur Montagerichtung nicht über die Anlagefläche für den äußeren Laufring hinaus erstrecken,
- Fig. 4:: ein weiteres alternatives Ausführungsbeispiel eines Klemmbügels mit sehr flach verlaufender Anlauframpe sowie gestufter Ablaufseite und
- Fig. 5:: einen Klemmbügel gemäß dem Stand der Technik.

### Ausführungsformen der Erfindung

In den Figuren sind gleiche Elemente und Elemente mit den gleichen Funktionen mit den gleichen Bezugszeichen gekennzeichnet.

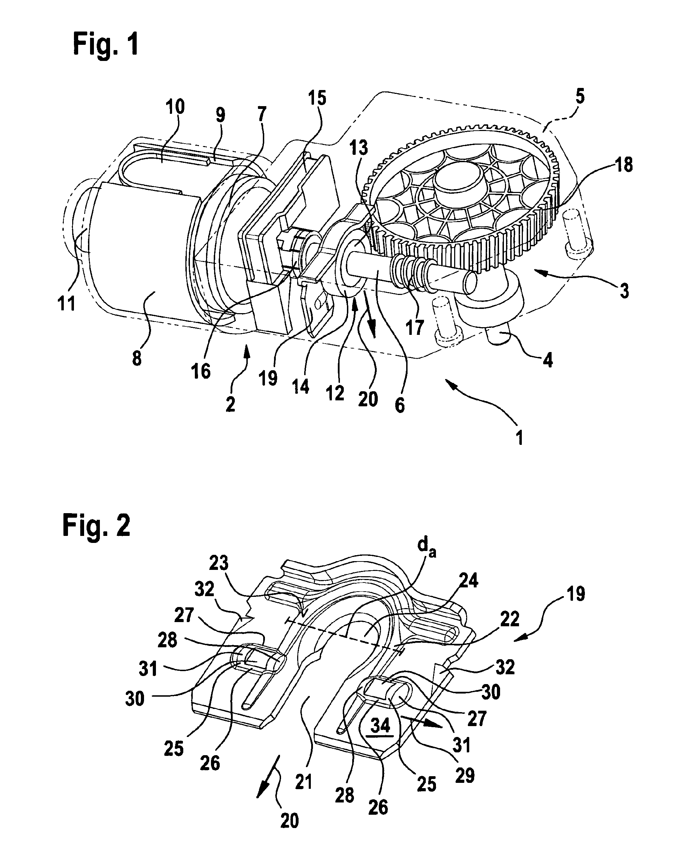

In Fig. 1 ist in einer perspektivischen, teilweise transparenten Darstellung ein Scheibenwischerantrieb 1, mit einem Elektromotor 2 und einem als Schneckengetriebe ausgebildeten Getriebe 3 gezeigt. Von dem Getriebe 3 wird eine Abtriebswelle 4 angetrieben, die aus einem Scheibenwischerantriebsgehäuse 5 herausragt.

Der Elektromotor 2 umfasst ein drehfest auf einer Ankerwelle 6 sitzendes Ankerpaket 7. Diesem sind zwei schalenförmige Permanentmagnete 8, 9 zugeordnet, die mit Hilfe von Abstandsklammern 10 in Umfangsrichtung voneinander beabstandet sind.

Die Ankerwelle 6 ist in der Zeichnungsebene links gelagert mittels eines als Radiallager ausgebildeten Sinterlagers 11 sowie mit Axialabstand hierzu mit Hilfe eines als Kugellager ausgebildeten Wälzlagers 12, umfassend einen inneren, drehfest mit der Ankerwelle 6 verbundenen Laufring 13 sowie einen radial benachbarten äußeren Laufring 14. Radial zwischen dem inneren Laufring 13 und dem äußeren Laufring 14 sind aus Übersichtlichkeitsgründen nicht gezeigte Wälzkörper angeordnet.

Axial zwischen dem Ankerpaket 7 und dem Wälzlager 12 ist ein Bürstenhalter 15 sowie ein mit diesem in bekannter Weise zusammenwirkender, drehfest auf der Ankerwelle 6 sitzender Kommutator 16 angeordnet.

Endseitig auf der Ankerwelle 6 sitzt eine Getriebeschnecke 17, die in einem drehmomentübertragenden Eingriff mit einem Abtriebszahnrad 18 ist, welches drehfest mit der Abtriebswelle 4 verbunden ist.

Wie sich weiterhin aus Fig. 1 ergibt, ist die Ankerwelle 6 gegen axiales Verstellen mit Hilfe eines Klemmbügels 19 (Klemmbrille) gesichert. Bei dem Klemmbügel 19 handelt es sich um ein Stanzbiegeteil aus Stahlblech, welcher in einer Montagerichtung 20 montiert ist. Der äußere Laufring 14 des Wälzlagers 12 stützt sich in axialer Richtung an dem flachen Klemmbügel 19 ab.

Im Folgenden werden anhand der Fig. 2 bis 4 unterschiedliche Ausführungsformen des bei einem Scheibenwischerantrieb 1 bzw. Elektromotor 2 gemäß Fig. 1 einsetzbaren Klemmbügels 19 beschrieben.

Wie sich aus Fig. 2 ergibt, ist der, eine Grundebene 34 aufweisende Klemmbügel 19 im Wesentlichen U-förmig konturiert und weist eine randseitig in die Montagerichtung 20 offene Ausnehmung 21 auf, deren Breitenerstreckung quer zur Montagerichtung 20 größer ist als der Durchmesser der Ankerwelle.

Der Klemmbügel 19 gemäß Fig. 2 weist einen U-förmig konturierte Anlagewulst 22 auf, der stirnseitig eine Anlagefläche 23 zum Abstützen des Wälzlagers 12, genauer des äußeren Laufrings 14, aufweist.

Der Anlagewulst 22 hat neben der Bereitstellung der Anlagefläche 23 für den äußeren Laufring 14 die Aufgabe der Versteifung des flachen Klemmbügels 19. Hierzu erstreckt sich der Anlagewulst 22 über die Umfangskontur des äußeren Laufrings 14 hinaus und zwar in zwei entgegengesetzte Richtungen quer zur Montagerichtung 20 nach außen, sowie in Montagerichtung 20.

Wie sich weiter aus Fig. 2 ergibt, ist der Klemmbügel 19, in einem in der Zeichnungsebene oberen Bereich zur Durchführung der Ankerwelle nach innen abgerundet ausgebildet, um eine Anlage des Klemmbügels 19 am inneren Laufring 13 zu vermeiden.

Auf beiden Seiten der Ausnehmung 21 befindet sich jeweils eine über die Grundebene 34 hinaus erstreckende Erhebung 25, wobei die Erhebungen 25 und in diesem Ausführungsbeispiel der gesamte Klemmbügel 19 spiegelsymmetrisch zu einer aus Übersichtlichkeitsgründen nicht eingezeichneten, die Montagerichtung 20 aufnehmenden und die Ausnehmung 21 durchsetzenden Spiegelebene ausgebildet sind.

Jede Erhebung 25 umfasst eine in Montagerichtung 20 gerichtete Anlaufseite 26, sowie eine entgegen der Montagerichtung 20 orientierte Ablaufseite 27. Die Erhebungen 25 sind in dem gezeigten Ausführungsbeispiel im Wesentlichen in der Art einer halben, längsgeschnittenen Medikamentenkapsel ausgeformt, wobei die höhenreduzierten Erhebungsabschnitte seitliche Aussparungen bilden. Anders ausgedrückt weisen die Erhebungen 25 die Form eines längsgeschnittenen Zylinders mit gerundeten Stirnseiten auf.

An jeder Anlaufseite 26 ist eine konvex gekrümmte Anlauframpe 28 realisiert, wobei sich die Anlauframpen 28 quer zur Montagerichtung 20 nach außen, also in eine von der Ausnehmung 21 wegweisende Richtung nicht weiter erstrecken als die Anlagefläche 23, die derart dimensioniert ist, dass sie eine stirnseitige Anlage des äußeren Laufrings 14 des Wälzlagers 12 mit Radialabstand zum Außenumfang des Laufrings 14 ermöglicht. Anders ausgedrückt ist die Erstreckung der Anlauframpe 28 in eine Richtung 29, die quer nach außen zur Montagerichtung 20 orientiert ist geringer als die das in Fig. 2 strichliert angedeuteten Außendurchmessers dₐ des äußeren Laufrings 14.

Wie sich weiter aus Fig. 2 ergibt, schließt an die Anlauffläche 23 außen in Richtung 29 ein ebener, abgestufter, höhenreduzierter, sich über die Grundebene 34 erhebender Erhebungsabschnitt 30 an, an den wiederum außen ein weiterer Erhebungsabschnitt 31 anschließt, dessen Höhe quer zu den Richtungen 29 in Bezug auf die Grundebene 34, der maximalen Höhe der Anlauframpe 28 in Bezug auf die Grundebene 34 entspricht. Anders ausgedrückt bildet der höhenreduzierte Erhebungsabschnitt 30 eine Aussparung in der zugehörigen Erhebung 25.

In Fig. 2 ist weiterhin zu erkennen, dass der Klemmbügel 19 randseitig mit je einer Klemmkralle 32 versehen ist, um ein unbeabsichtigtes Lösen des Klemmbügels 19 aus einer Montageposition zu verhindern.

Im Folgenden werden alternative Ausführungsbeispiele eines Klemmbügels 19 anhand der Fig. 3 und 4 beschrieben, wobei zur Vermeidung von Wiederholungen lediglich auf Unterschiede zu dem in Fig. 2 gezeigten und zuvor beschriebenen Ausführungsbeispiel eingegangen wird. Im Hinblick auf die Gemeinsamkeiten wird auf die vorangehende Figurenbeschreibung sowie auf Fig. 2 verwiesen.

Bei dem Ausführungsbeispiel gemäß Fig. 3 enden die Erhebungen 25 in der Richtung 29, d.h. quer zur Montagerichtung 20 nach außen orientiert, mit dem Ende der jeweiligen Anlauframpe 28, die sich wie bei dem Ausführungsbeispiel gemäß Fig. 2 in Richtung 29 nicht über den in Fig. 3 nicht eingezeichneten Außendurchmesser dₐ des äußeren Laufrings erstreckt. Anders ausgedrückt unterscheidet sich das Ausführungsbeispiel gemäß Fig. 3 von dem Ausführungsbeispiel gemäß Fig. 2 dadurch, dass auf das Vorsehen des höhenreduzierten Erhebungsabschnittes sowie des weiteren Erhebungsabschnittes verzichtet wurde.

Bei dem Ausführungsbeispiel gemäß Fig. 4 ist die Anlauframpe 28 jeder Erhebung 25 flacher ausgeführt als bei den zuvor beschriebenen Ausführungsbeispielen, wodurch die Spanbildung weiter reduziert werden kann. Darüber hinaus sind die Erhebungen 25 auf ihrer jeweiligen Ablaufseite 27 mit einer Stufung 33 versehen, die ein schlagartiges zurückfedern des Klemmbügels 19 nach Überwinden der Anlauframpe 28 bei der Montage ermöglichen. Aufgrund des Vorsehen der Stufungen 33 kann bei Bedarf auf die Klemmkrallen 32 verzichtet werden, da die Stufungen 33 einer Hinterrastung für den äußeren Laufring des Wälzlagers bilden und somit den Klemmbügel 19 gegen ein unbeabsichtigtes Lösen entgegen der Montagerichtung 20 sichern. Wie bei dem Ausführungsbeispiel gemäß Fig. 2 schließen an die Anlauframpen 28 in den Richtungen 29 jeweils ein höhenreduzierter Erhebungsabschnitt 30 sowie ein weiterer Erhebungsabschnitt 31 an.

## Patentansprüche

1. Klemmbügel zum axialen Sichern einer Ankerwelle (6) eines Elektromotors (2), mit einer randseitig offenen Ausnehmung (21) zum Aufschieben des Klemmbügels (19) über eine Welle in eine Montagerichtung (20), mit mindestens einer seitlich der Ausnehmung (21) angeordneten, eine in Montagerichtung (20) weisende Anlaufseite (26) und eine entgegen der Montagerichtung (20) weisende Ablaufseite (27) aufweisenden, Erhebung (25), wobei die Erhebung (25) mit einer auf einer Anlaufseite (26) ausgebildeten Anlaufsrampe (28) zum Entlanggleiten an einem äußeren Laufring (14) eines Wälzlager (12) der Ankerwelle (6) bei der Montage ausgestattet ist, und mit einer Anlagefläche (23) zum axialen Abstützen des äußeren Laufrings (14),
**dadurch gekennzeichnet,**
**dass** sich die Anlauframpe (28) quer zur Montagerichtung (20) weniger weit nach außen erstreckt als der Außendurchmesser (dₐ) des äußeren Laufrings (14) und/oder dass an der Ablaufseite (27) eine ein Einfedern des Klemmbügels (19) in seine Montageposition ermöglichende Stufung (33) vorgesehen ist.

2. Klemmbügel nach Anspruch 1,
**dadurch gekennzeichnet,**
**dass** die Erstreckung der Anlauframpe (28) quer zur Montagerichtung (20) nach innen so bemessen ist, dass die Erhebung (25) bei der Montage nicht entlang eines inneren Laufrings (13) gleitet.

3. Klemmbügel nach einem der Ansprüche 1 oder 2,
**dadurch gekennzeichnet,**
**dass** sich die Erhebung (25) quer zur Montagerichtung (20) nach außen nicht über die Anlauframpe (28) hinaus erstreckt.

4. Klemmbügel nach einem der Ansprüche 1 oder 2,
**dadurch gekennzeichnet,**
**dass** sich die Erhebung (25) quer zur Montagerichtung (20) nach außen über die Anlauframpen (28) hinaus erstreckt.

5. Klemmbügel nach Anspruch 4,
**dadurch gekennzeichnet,**
**dass** außen an die Anlauframpe (28) ein sich quer zur Montagerichtung (20) nach außen erstreckender höhenreduzierter Erhebungsabschnitt (30) anschließt.

6. Klemmbügel nach Anspruch 5,
**dadurch gekennzeichnet,**
**dass** außen an den höhenreduzierten Erhebungsabschnitt (30) ein weiterer Erhebungsabschnitt (31) anschließt, dessen Höhe in Richtung (29) der Axialerstreckung der Ankerwelle (6) der Höhe der Erhebung (25) im Bereich (24) der Anlauframpe (28) entspricht.

7. Klemmbügel nach einem der vorhergehenden Ansprüche,
**dadurch gekennzeichnet,**
**dass** die Stufung (33) auf der Ablaufseite (27) derart ausgebildet ist, dass diese eine Hinterrastung für den äußeren Laufring (14) des Wälzlagers (12) zum Sichern des Klemmbügels (19) gegen unbeabsichtigtes Lösen entgegen der Montagerichtung (20) bildet.

8. Klemmbügel nach einem der vorhergehenden Ansprüche,
**dadurch gekennzeichnet,**
**dass** die Anlauframpe (28) konvex gerundet ist.

9. Klemmbügel nach einem der vorhergehenden Ansprüche,
**dadurch gekennzeichnet,**
**dass** die Anlagefläche (23) zum axialen Abstützen des äußeren Laufrings (14) von einer Scheitelfläche eines Anlagewulstes (22) gebildet ist, dessen Höhe in Richtung (29) der Längserstreckung der Ankerwelle (6) geringer ist als die Höhe der Anlauframpe (28).

10. Klemmbügel nach einem der vorhergehenden Ansprüche,
**dadurch gekennzeichnet,**
**dass** auf beiden Seiten der Ausnehmung (21) jeweils eine Erhebung (25) angeordnet ist, und dass vorzugsweise die Erhebungen (25) spiegelsymmetrisch ausgebildet und/oder angeordnet sind.

11. Elektromotor, vorzugsweise für einen Scheibenwischerantrieb (1), mit einem einen äußeren Laufring (14) aufweisenden Wälzlager (12) und einem, vorzugsweise axial zwischen einem Kommutator (16) und einem Wälzlager (12) angeordneten Klemmbügel (19) nach einem der vorhergehenden Ansprüche zum axialen Abstützen des äußeren Laufrings (14).

## Claims

1. Clamp for axially securing an armature shaft (6) of an electric motor (2), having a recess (21) open at the edge, for fitting the clamp (19) over a shaft in a mounting direction (20), having at least one run-up side (26) which is arranged to the side of the recess (21) and points in the mounting direction (20), and an elevation (25) which has a run-off side (27) which points in the opposite direction to the mounting direction (20), wherein the elevation (25) is equipped with a run-on ramp (28) formed on a run-on side (26), for sliding along an outer running ring (14) of a roller bearing (12) of the armature shaft (6) during mounting, and having a bearing face (23) for axially supporting the outer running ring (14),
**characterized**
**in that** the run-on ramp (28) extends less far toward the outside transversely with respect to the mounting direction (20) than the outer diameter (dₐ) of the outer running ring (14), and/or in that a step (33) which permits compression of the clamp (19) into its mounted position is provided on the run-off side (27).

2. Clamp according to Claim 1,
**characterized**
**in that** the extent of the run-on ramp (28) transversely with respect to the mounting direction (20) toward the inside is dimensioned in such a way that the elevation (25) does not slide along an inner running ring (13) during mounting.

3. Clamp according to either of Claims 1 and 2,
**characterized**
**in that** the elevation (25) does not extend outward beyond the run-on ramp (28) transversely with respect to the mounting direction (20).

4. Clamp according to either of Claims 1 and 2,
**characterized**
**in that** the elevation (25) extends outward beyond the run-on ramps (28) transversely with respect to the mounting direction (20).

5. Clamp according to Claim 4,
**characterized**
**in that** a height-reduced elevation section (30) which extends outward transversely with respect to the mounting direction (20) adjoins the run-on ramp (28) on the outside.

6. Clamp according to Claim 5,
**characterized**
**in that** a further elevation section (31) adjoins the height-reduced elevation section (30) on the outside, the height of which further elevation section (31) corresponds, in the direction (29) of the axial extent of the armature shaft (6), to the height of the elevation (25) in the region (24) of the run-on ramp (28).

7. Clamp according to one of the preceding claims,
**characterized**
**in that** the step (33) is formed on the run-off side (27) in such a way that said run-off side (27) forms an element behind which the outer running ring (14) of the roller bearing (12) can latch in order to secure the clamp (19) against unintentional release in the opposite direction to the mounting direction (20).

8. Clamp according to one of the preceding claims,
**characterized**
**in that** the run-on ramp (28) is rounded convexly.

9. Clamp according to one of the preceding claims,
**characterized**
**in that** the run-on ramp (23) is formed for axially supporting the outer running ring (14) from an apex surface of a bearing lead (22) whose height is smaller in the direction (29) of the longitudinal extent of the armature shaft (6) than the height of the run-on ramp (28).

10. Clamp according to one of the preceding claims,
**characterized**
**in that** an elevation (25) is arranged on each of the two sides of the recess (21), and in that the elevations (25) are preferably embodied and/or arranged in a mirror-symmetrical fashion.

11. Electric motor, preferably for a windscreen wiper drive (1), having a roller bearing (12) which has an outer running ring (14), and a clamp (19), preferably arranged axially between a commutator (16) and a roller bearing (12), according to one of the preceding claims for axially supporting the outer running ring (14).

## Revendications

1. Etrier de serrage pour la fixation axiale d'un arbre d'induit (6) d'un moteur électrique (2), avec un évidement (21) ouvert du côté du bord pour pousser l'étrier de serrage (19) sur un arbre dans une direction de montage (20), avec au moins un rehaussement (25) disposé latéralement à l'évidement (21), présentant un côté d'entrée (26) faisant face à une direction de montage (20), et un côté de sortie (27) faisant face à l'opposé de la direction de montage (20), le rehaussement (25) étant muni d'une rampe d'entrée (28) réalisée sur un côté d'entrée (26) pour glisser le long d'une bague de roulement extérieure (14) d'un palier à roulement (12) de l'arbre d'induit (6) lors du montage, et avec une surface d'appui (23) pour supporter axialement la bague de roulement extérieure (14),
**caractérisé en ce que**
la rampe d'entrée (28) s'étend transversalement à la direction de montage (20) moins loin vers l'extérieur que le diamètre extérieur (dₐ) de la bague de roulement extérieure (14) et/ou **en ce qu'**un gradin (33) permettant une suspension à ressort de l'étrier de serrage (19) dans sa position de montage est prévu sur le côté de sortie (27).

2. Etrier de serrage selon la revendication 1,
**caractérisé en ce que**
l'étendue de la rampe d'entrée (28) est dimensionnée vers l'intérieur transversalement à la direction de montage (20) de telle sorte que le rehaussement (25) ne glisse pas le long d'une bague de roulement interne (13) lors du montage.

3. Etrier de serrage selon l'une quelconque des revendications 1 ou 2,
**caractérisé en ce que**
le rehaussement (25) ne s'étend pas transversalement à la direction de montage (20) vers l'extérieur au-delà de la rampe d'entrée (28).

4. Etrier de serrage selon l'une quelconque des revendications 1 ou 2,
**caractérisé en ce que**
le rehaussement (25) s'étend transversalement à la direction de montage (20) vers l'extérieur au-delà de la rampe d'entrée (28).

5. Etrier de serrage selon la revendication 4,
**caractérisé en ce**
**qu'**une portion de rehaussement (30) de hauteur réduite s'étendant transversalement à la direction de montage (20) vers l'extérieur se raccorde à l'extérieur à la rampe d'entrée (28).

6. Etrier de serrage selon la revendication 5,
**caractérisé en ce**
**qu'**une autre portion de rehaussement (31) se raccorde à l'extérieur à la portion de rehaussement (30) de hauteur réduite, sa hauteur dans la direction (29) de l'étendue axiale de l'arbre d'induit (6) correspondant à la hauteur du rehaussement (25) dans la région (24) de la rampe d'entrée (28).

7. Etrier de serrage selon l'une quelconque des revendications précédentes,
**caractérisé en ce que**
le gradin (33) sur le côté de la sortie (27) est réalisé de telle sorte qu'il forme un.encliquetage par l'arrière pour la bague de roulement extérieure (14) du palier à roulement (12) en vue de fixer l'étrier de serrage (19) contre un desserrage accidentel dans le sens opposé à la direction de montage (20).

8. Etrier de serrage selon l'une quelconque des revendications précédentes,
**caractérisé en ce que**
la rampe d'entrée (28) est arrondie avec une forme convexe.

9. Etrier de serrage selon l'une quelconque des revendications précédentes,
**caractérisé en ce que**
la surface d'appui (23) est formée pour supporter axialement la bague de roulement extérieure (14) par une surface de sommet d'un bourrelet d'appui (22) dont la hauteur dans la direction (29) de l'étendue longitudinale de l'arbre d'induit (6) est inférieure à la hauteur de la rampe d'entrée (28).

10. Etrier de serrage selon l'une quelconque des revendications précédentes,
**caractérisé en ce que**
des deux côtés de l'évidement (21) est à chaque fois disposé un rehaussement (25), et **en ce que** de préférence les rehaussements (25) sont réalisés et/ou disposés avec une symétrie spéculaire.

11. Moteur électrique, de préférence pour un entraînement d'essuie-glace (1), comprenant un palier à roulement (12) présentant une bague de roulement extérieure (14) et un étrier de serrage (19) disposé de préférence axialement entre un commutateur (16) et un palier de roulement (12), selon l'une quelconque des revendications précédentes, pour le support axial de la bague de roulement extérieure (14).
